Europäisches Patentamt

(19) European Patent Office

Office européen des brevets

(11) Publication number : **0 468 937 A2**

(12) # EUROPEAN PATENT APPLICATION

(21) Application number : 91830303.3

(51) Int. Cl.⁵ : **G02B 7/182, B23K 26/02**

(22) Date of filing : 09.07.91

(30) Priority : 27.07.90 IT 6760190

(43) Date of publication of application :
29.01.92 Bulletin 92/05

(84) Designated Contracting States :
AT BE CH DE ES FR GB IT LI NL SE

(71) Applicant : PRIMA INDUSTRIE S.p.A.
Via San Quintino, 28
I-10121 Torino (IT)

(72) Inventor : Sartorio, Franco
Corso Montevecchio 48
I-10129 Torino (IT)
Inventor : Iannarelli, Luigi
Via Ponchielli, 7
I-10154 Torino (IT)

(74) Representative : Quinterno, Giuseppe et al
c/o Jacobacci-Casetta & Perani S.p.A. Via
Alfieri, 17
I-10121 Torino (IT)

(54) An adjustment device for aligning a laser beam along a predetermined reference line.

(57) An adjustment device for aligning a laser beam along a predetermined reference line includes a base structure carrying first and second plane mirrors (14, 16), in which the first mirror (14) receives a beam (4) from a laser source (2) and reflects it onto a second mirror (16) which in turn reflects it along an output line (8). Each of the two mirrors is rotatable on the base structure (18) about an axis substantially perpendicular to the line of the beam incident on the mirror. Each of the two mirrors is also translatable in a direction (D, E) perpendicular to its axis of rotation (A, E). Control means are associated with each of the two mirrors (14, 16) for rotating the mirrors independently of the translational movement and vice versa.

EP 0 468 937 A2

FIG. 2

The present invention relates to an adjustment device for aligning a laser beam along a predetermined reference line, of the type including:

– a base structure carrying first and second plane mirrors of which the first mirror receives a beam from a laser source and reflects it on to the second mirror which reflects it in turn along an output line substantially perpendicular to the line of the beam incident on the first mirror, and

– adjustment means for varying the positions of the mirrors so as to cause the output line along which the beam is reflected by the second mirror to coincide with the reference line.

An adjustment device of the type indicated above is generally used in laser equipment such as a welding or cutting robot or the like and constitutes an optical connection between the laser generator and the optical chain which sends the laser beam to the focusing head of the equipment. The line along which the beam is emitted by the generator is often altered during maintenance of the laser generator. In order to compensate for these errors, the adjustment device is adjusted whilst the positions of the various mirrors constituting the optical chain of the equipment are left unchanged.

In known adjustment devices, each mirror is rotatable about two perpendicular axes. With devices of this type, the adjustment of the line of the beam has been found to be somewhat laborious. For example, in order to translate the beam output by the device whilst retaining its orientation, the inclination of the beam has to be changed several times by the successive pivoting of the mirrors and the parallelism of the beam to the reference line which was achieved by previous adjustments is thus lost.

The object of the present invention is to provide an adjustment device of the type indicated at the beginning which enables the line of the beam to be adjusted more quickly and easily.

According to the present invention, this object is achieved by the provision of an adjustment device of the type defined above, characterised in that:

– each of the two mirrors is rotatable on the base structure about an axis substantially perpendicular to the line of the beam incident on the mirror and contained in the plane of the reflecting surface of the mirror,

– the axes of rotation of the mirrors are perpendicular to each other,

– each of the two mirrors can be translated along a line perpendicular to its axis of rotation,

– control means are associated with each of the two mirrors for rotating each mirror independently of its translational movement and vice versa.

As will be explained further in the course of the detailed description which follows, the pivoting of the two mirrors enables the beam output by the adjustment device to be pivoted in two perpendicular planes whereas the translations of the two mirrors enable the beam to be translated in two perpendicular directions whilst its orientation is kept constant. The adjustment of the line of the beam is thus considerably simplified, given that the translational movements of the beam are substantially independent of its angular orientations and vice versa.

Further characteristics and advantages of the present invention will become clear in the course of the detailed description which follows with reference to the appended drawings provided purely by way of non-limiting example, in which:

Figure 1 is a schematic view showing laser equipment with a device according to the present invention,

Figure 2 is a perspective view of the device according to the invention,

Figure 3 is an elevational view taken on the arrow III of Figure 2,

Figure 4 is a partially sectioned view of the part indicated by the arrow IV in Figure 3, on an enlarged scale, and

Figure 5 is an elevational view taken on the arrow V of Figure 2.

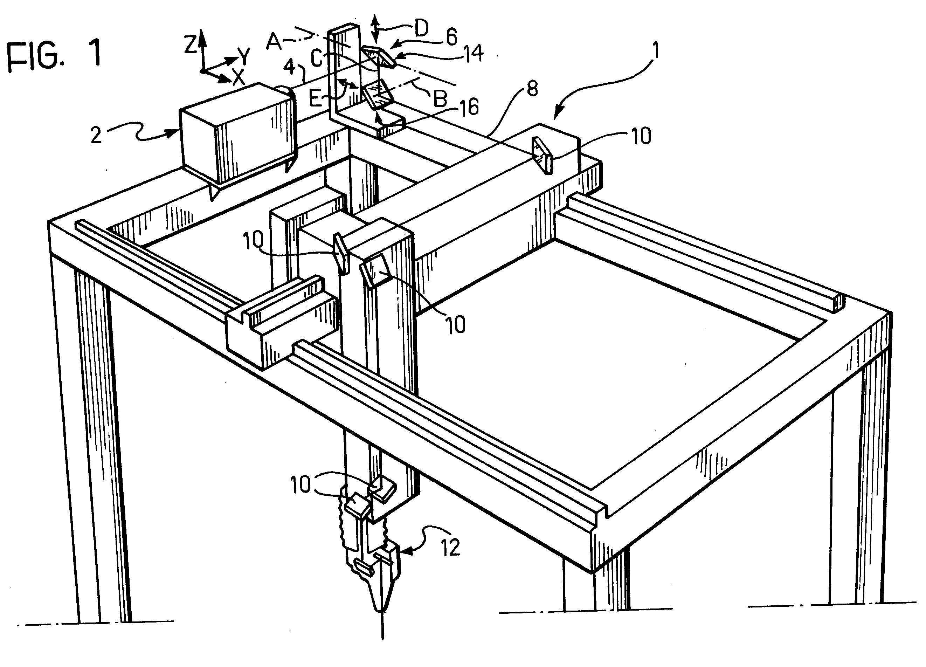

With reference to Figure 1, a welding or cutting laser robot, indicated 1, includes a laser generator 2 which sends a beam 4 to an adjustment device 6. The laser beam 8 output by the adjustment device 6 is reflected by a series of mirrors 10 and is sent to an optical focusing head 12. The axes of a cartesian reference system are indicated X, Y and Z.

The adjustment device 6 includes a pair of plane mirrors 14, 16, the first of which receives the beam 4 from the generator 2 along a line parallel to the axis Y and reflects it to the second mirror 16. The latter receives the beam reflected by the first mirror 14 and directs it along a line parallel to the axis X to the optical chain which leads to the focusing head 12.

The first mirror 14 is rotatable about an axis A parallel to the axis X and substantially perpendicular to the line of the incident beam 4. The second mirror 16 is rotatable in turn about an axis B parallel to the axis Y and substantially perpendicular to the line of the beam reflected by the first mirror 14. As will be explained below, each of the axes A and B is contained in the plane of the reflecting surface of the respective mirror 14, 16. The first mirror 14 is translatable along a line parallel to the axis Z in the directions indicated by the double arrow D. Similarly, the second mirror 16 is translatable along a line parallel to the axis X in the directions indicated by the double arrow E. The line along which each mirror 14, 16 can be translated is therefore perpendicular to its axis of rotation A, B.

The rotation of the first mirror 14 about the axis A rotates the beam 8 reflected by the second mirror 16 in the plane X-Y. The rotation of the second mirror 16 about the axis B rotates the output beam 8 in the plane X-Z. The translation of the first mirror 14 along line indicated by the arrow D (axis Z) results purely in a translation of the beam 8 in the plane X-Y, whereas the translation of the second mirror 16 along the line C (axis X) results in a translation of the beam 8 in the plane X-Z whilst its orientation remains the same.

The adjustment device 6 thus enables the output beam 8 to be oriented along a predetermined reference line, whatever the orientation of the input beam 4 (provided that it strikes the reflecting surface of the first mirror 14), the reference line being displayed, for example, by means of two targets (one at close range and one at long range) on which the beam 8 has to be focused. The beam can be focused on the close-range target by the translation of the mirrors 14, 16, whilst it can be focused on the the long-range target by the rotation of the mirrors 14, 16. The orientation of the output beam is adjusted very quickly since the pivoting of the beam 8 is substantially independent of its translation.

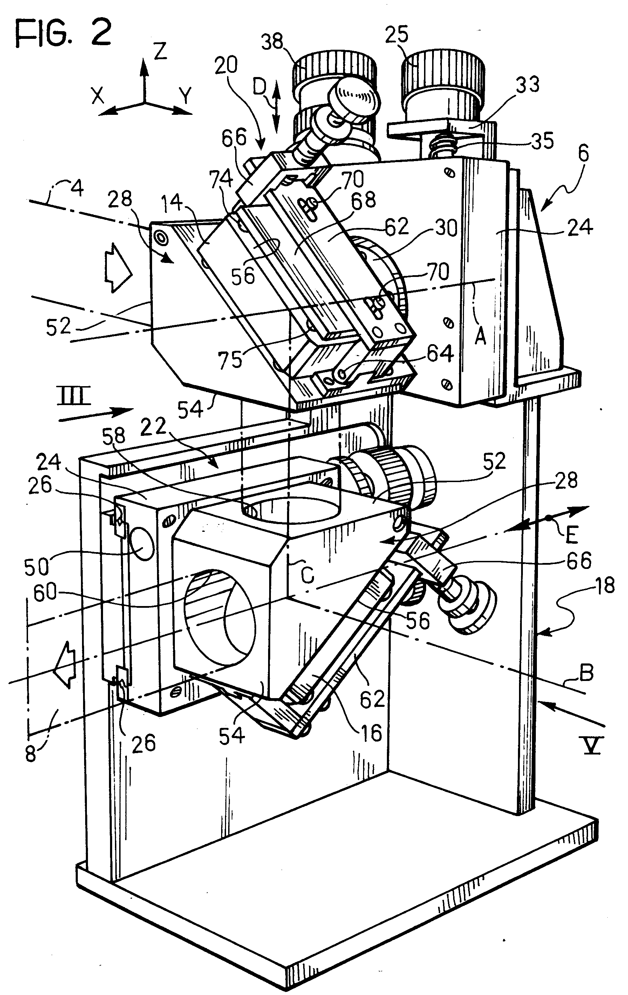

A preferred embodiment of the adjustment device 6 is described with reference to Figures 2 to 5.

The device 6 includes a base structure 18 with two identical mirror-holder units 20, 22.

Each mirror-holder unit 20, 22 includes a translatable body 24 slidable along roller guides 26 carried by the base structure 18 (only the guides of the second mirror-holder unit 22 are visible in the drawings). The guides 26 of the first unit 20 extend in a plane parallel to the plane Y-Z, whilst the guides 26 of the second unit 22 extend in a plane parallel to the plane X-Z.

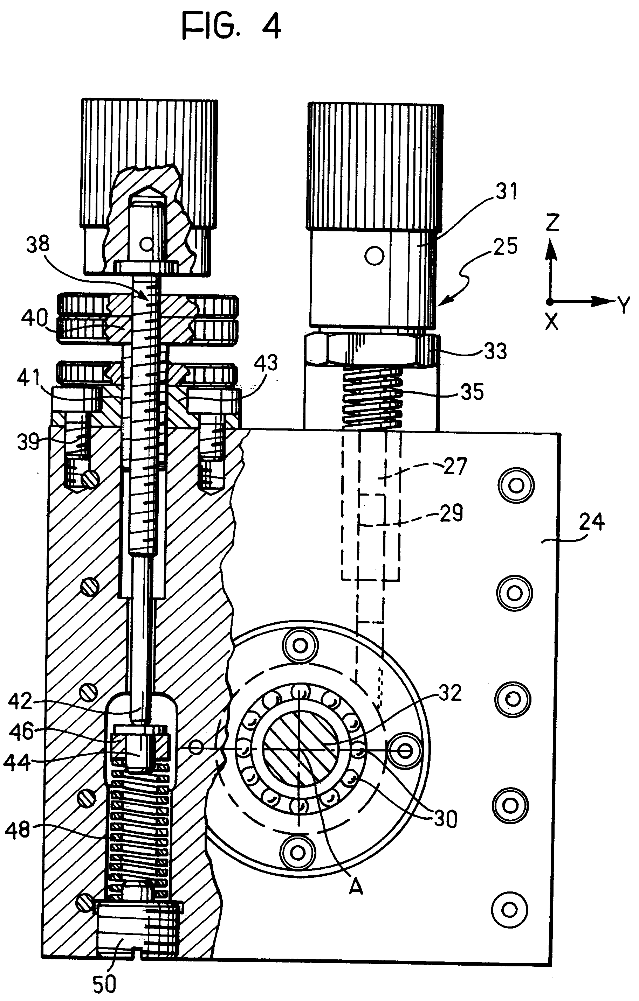

Each body 24 is moved along the guides 26 by a screw 25 with a threaded shank 27 which engages a threaded hole 29 in the body 24 (Figure 4). The screw 25 has a head 31 which reacts against a flange 33 of the structure 18. A helical spring 35 is interposed under compression between the flange 33 and the body 24. When the screw 25 is tightened, the body moves towards the flange 33 to compress the spring 35. When the screw 25 is unscrewed, however, the spring 35 extends to move the body 25 away from the flange 33.

Each translatable body 24 carries a support member 28 which can rotate on the translatable body 24 about the axis A or B, respectively. As can be seen in Figure 4, the support member 28 is connected rotatably to the translatable body 24 by a ball bearing 30 which is carried by the body 24 and in turn carries a pin 32 which forms part of the support member 28.

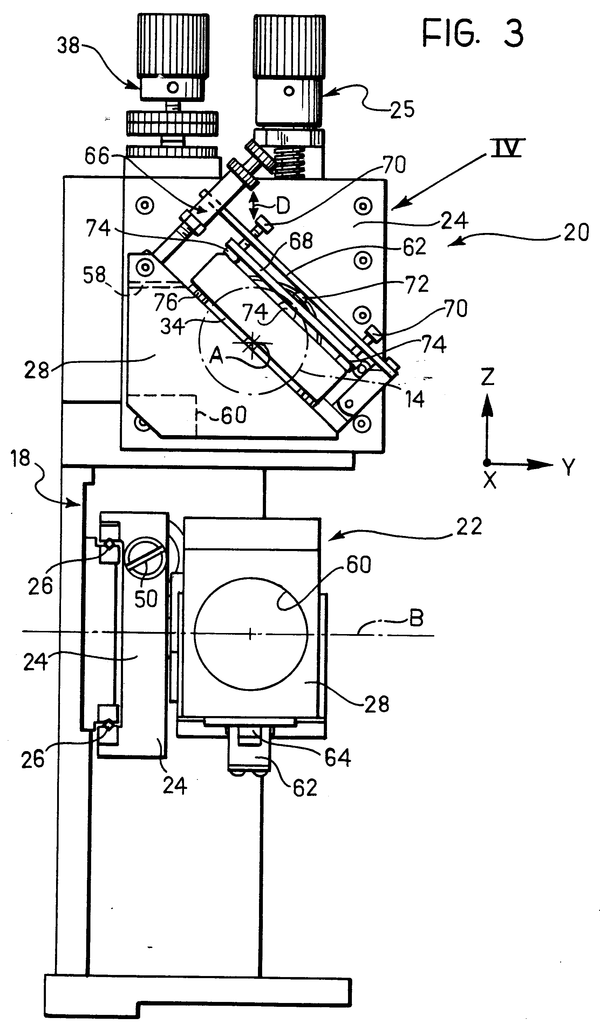

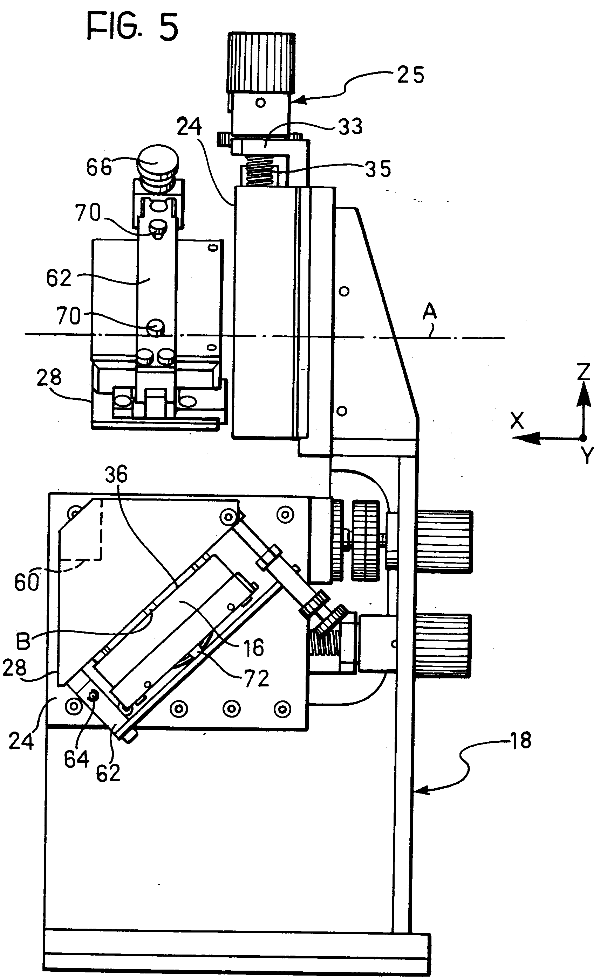

As can be seen in Figure 2, the axis of rotation A of the support member 28 of the first mirror-holder unit 20 is perpendicular to the plane Y-Z and is also substantially perpendicular to the line of the beam 4 incident on the first mirror 14. Similarly, the axis of rotation B of the support member 28 of the second unit 22 is perpendicular to the plane X-Z and is also substantially perpendicular to the line C of the beam incident on the second mirror 16. As can be seen in Figures 3 and 5, the axes A, B of the pins 32 carrying the support members 28 are contained in the planes of the reflecting surfaces 34, 36 of the mirrors 14, 16.

A second adjustment screw, indicated 38, is intended to rotate the body 28 about the axis A, B. As can be seen in Figure 4, the screw 33 engages the internal thread 39 of a ring nut 40 which in turn has an external thread 41 that engages a threaded member 43 fixed to the translatable body 24. One end 42 of the screw 38 acts on an appendage 46 of the support member 28 through a pin 44, the appendage being spaced radially from the axis of rotation A of the member 28. A helical spring 48 is interposed under compression between the appendage 46 of the member 28 and a screw 50 fixed to the body 24. The pitch of the screw 38 is slightly different from the pitch of the external thread 41 of the ring nut 40. In particular, the pitch of the external thread 41 is a few tenths of a millimetre longer than the pitch of the internal thread 39. Two adjustment movements of the screw 38 can thus be achieved with different degrees of precision. A first adjustment movement is effected if the ring nut 40 is kept stationary and the screw 38 is rotated; in this case, the axial displacement of the screw 38 is determined by the pitch of the screw 38. A second adjustment movement is effected if the screw 38 is prevented from rotating and the ring nut 40 is rotated; in this case, a more precise adjustment movement is achieved since the axial advance of the screw 38 is determined by the difference between the pitches of the internal and external threads of the ring nut 40. The helical spring 48 always keeps the appendage 46 in contact with the end 42 of the screw 38. If the screw 38 is tightened against the action of the spring 48, the support member 28 is rotated anticlockwise; if the screw 38 is unscrewed, however, the spring 48 rotates the support member 28 clockwise.

Each support member 28 is generally wedge-shaped with two perpendicular walls 52, 54 and a wall 56 which is inclined at 45° to the walls 52, 54. Each member 28 has two circular through-holes 58,60 which open in its inclined wall 56. The axes of the holes 58, 60 intersect and are perpendicular to each other and coincide substantially with the line of the beam incident on the mirror and with the line of the reflected beam, respectively.

Each support member 28 has a mechanism for clamping the mirror 14, 16 under pressure against the inclined wall 56 of the member 28. This mechanism comprises a lever 62 which is articulated to the member 28 at 64 and whose free end is urged towards the wall 56 of the member 28 by a screw closure element 66 which is also articulated to the member 28. The lever 62 carries a plate 68 which can pivot freely and is restrained by the lever 62 by means of a pair of pins 70 extending through respective slots in the lever 62.

The plate 68 has a hemispherical projection 72 (Figures 3 and 5) for transmitting the clamping force from the lever 62 to the plate 68. The plate 68 also has three pressure feet 74 which act on the surface of the mirror 14, 16 opposite its reflecting surface 34. The mirror 14, 16 in turn has three supports 76 on its reflecting surface 34 and these are urged against the inclined wall 56 of the support member 28. The pressure feet 74 of the plate 68 act on the mirror 14, 16 in correspondence with the supports 76 so that the clamping force applied by the lever 62 by means of the plate 68 is discharged on the surface 56 through the mirror 14 without creating internal stresses or consequent deformations of the mirror 14 which would compromise its optical precision. The fact that the plate 68 is fixed pivotally to the lever 62 by means of the hemispherical element 72 means that the fixing of the mirror 14, 16 is perfectly isostatic and is independent of the clamping force, enabling it to be mounted with a high degree of repeatability.

In the embodiment illustrated in the drawings, the adjustment screws which rotate the mirrors and translate the bodies 24 have hand-operable knobs. In a variant, the adjustment device according to the invention could have actuators associated with the adjustment screws and operated by a control unit which enables the beam 8 to be adjusted without manual intervention on the device 6.

## Claims

1. An adjustment device for aligning a laser beam along a predetermined reference line, including:
   – a base structure (18) carrying first and second plane mirrors (14, 16) of which the first mirror (14) receives a beam (4) from a laser source (2) and reflects it on to the second mirror (16) which reflects it in turn along an output line (8) substantially perpendicular to the line of the beam (4) incident on the first mirror (14), and
   – adjustment means for varying the positions of the mirrors (14, 16) so as to cause the output line (8) along which the beam is reflected by the second mirror (16) to coincide with the reference line,
   characterised in that:
   – each of the two mirrors (14, 16) is rotatable on the base structure (18) about an axis (A, B) substantially perpendicular to the line of the beam incident on the mirror (14, 16) and contained in the plane of the reflecting surface (36) of the mirror (14, 16),
   – the axes of rotation (A, B) of the mirrors (14, 16) are perpendicular to each other,
   – each of the two mirrors (14, 16) can be translated along a line (D, E) perpendicular to its axis of rotation (A, B),
   – control means (38) are associated with each of the two mirrors (14, 16) for rotating each mirror (14, 16) independently of its translational movement and vice versa.

2. A device according to Claim 1, characterised in that it includes two identical mirror-holder units (20, 22) each of which includes a translatable body (24) slidable along guides (26) carried by the base structure (18), each mirror-holder unit (22, 24) including a member (28) which supports the mirror (14, 16) and is rotatable relative to the translatable body (24) about an axis (A, B) perpendicular to the line along which the latter slides.

3. A device according to Claim 2, characterised in that each mirror-holder unit (20, 22) has a first adjustment screw (25, 27) for sliding the body (24) along its guides (26) and a second adjustment screw (38) for rotating the support member (28) about its axis of rotation (A, B).

4. A device according to Claim 3, characterised in that the first adjustment screw has a head (25) which reacts against a flange (33) of the base structure (18) and a threaded shank (27) which engages a threaded hole (29) in the body (24), a helical spring (35) being interposed under compression between the body (24) and the flange (33) of the base structure (18).

5. A device according to Claim 3, characterised in that the second adjustment screw (38) engages a threaded seat (40) in the translatable body (24) and its end (42) is urged against an appendage (46) of the support member (28), the appendage being spaced radially from the axis of rotation (A, B) of the support member (28), and in that resilient means (48) are interposed between the translatable body (24, 26) and the appendage (46) of the support member (28) for keeping the appendage (46) constantly in contact with the end (42) of the adjustment screw (38).

6. A device according to Claim 5, characterised in that the threaded seat is constituted by a ring nut (40) which has an internal thread (39) engaged by the screw (38) and an external thread (41) which engages a threaded member (43) fixed to the translatable body (2A), the pitches of the internal thread (39) and the external thread (41) of the ring nut (40) being slightly different.

7. A device according to Claim 2, characterised in that each support member (28) is generally wedge-shaped with two perpendicular walls (52, 54) having respective holes (58, 60) which have intersecting, mutually perpendicular axes and open in the inclined wall (56) facing the reflecting surface (34) of the mirror (14, 16), each support member (28) having a mechanism for clamping the mirror (14, 16) under pressure against the inclined wall (56) of the support member (28).

8. A device according to Claim 7, characterised in that the clamping mechanism comprises a lever (62) articulated to the support member (28) and associated with a screw closure element (66), the lever (62) carrying a plate (68) which can pivot freely relative to the lever (62) about at least two perpendicular axes, the plate (68) acting on the mirror (14, 16) at three points of contact (74) arranged in correspondence with a similar number of points of contact between the mirror (14, 16) and the inclined wall (56) of the support member (28).

9. A device according to Claim 8, characterised in that a hemispherical element (72) is interposed between the lever (62) and the plate (68) and transmits the entire clamping force from the lever (62) to the plate (68).

10. A device according to Claim 2, characterised in that the guides (26) for the sliding of the translatable bodies (24) of the two mirror-holders (20, 22) are contained in mutually perpendicular planes.

11. Laser equipment including a laser generator (2) and an optical chain for sending the beam emitted by the generator to an optical focusing head (12), characterised in that it includes an adjustment device (6) according to one or more of the preceding claims, interposed between the generator (2) and the optical chain (10).

FIG. 1

# FIG. 2

FIG. 3

# FIG. 4

FIG. 5